# EUROPEAN PATENT APPLICATION

(11) **EP 2 485 385 A2**
(43) Date of publication of application: **08.08.2012**
(21) Application number: 12153360.8
(22) Date of filing: 31.01.2012
(51) Int. Cl.: H02P 3/04, H02P 9/04

(54) **Method and system for testing a mechanical brake of a wind rotor shaft of a wind turbine**

(30) Priority: 07.02.2011 US 201113022137
(71) Applicant: General Electric Company, Schenectady, NY 12345 (US)
(72) Inventor: Scholte-Wassink, Hartmut, 49828 Lage (DE)
(74) Representative: Bedford, Grant Richard

(57) **Abstract**

The present disclosure relates to a method for testing a mechanical (100) brake of a wind rotor shaft (44, 48) of a wind turbine, including: applying a predetermined desired brake torque to the mechanical brake; applying a predetermined drive torque to the wind rotor shaft by a motor (42); and, measuring a parameter indicative the rotational speed of the wind rotor shaft; and, determining the performance based on the measured value of parameter indicative for the rotational speed. Further, the present disclosure concerns a method for testing a mechanical brake (100) of a drive train (44, 48) of a wind turbine including: applying a predetermined rotational speed to a wind rotor shaft of the drive train by a motor; applying a predetermined desired brake torque to the mechanical brake; maintaining the rotational speed of the drive train at the predetermined rotational speed; and, determining the actual brake torque.

## Description

The subject matter described herein relates generally to methods and systems for testing a brake of a wind rotor shaft of a wind turbine, and more particularly, to methods and systems for testing a brake of a wind rotor shaft of a wind turbine including a generator.

At least some known wind turbines include a tower and a nacelle mounted on the tower. A wind rotor is rotatably mounted to the nacelle and is coupled to a generator by at least one shaft. A plurality of blades extends from a hub of the wind rotor. The blades are oriented such that wind passing over the blades turns the wind rotor and rotates the at least one shaft, thereby driving a generator to generate electricity.

Wind turbines have typically a mechanical brake and in some embodiments, an air brake for reducing a rotational speed of the wind rotor and a drive train including the shaft. For example air brakes may use a specific pitch of the rotor blades, for example the feathering position of the blades, such that the rotational speed is reduced. Mechanical brakes are typically brakes using friction, for example like a disc brake, to reduce the rotational speed of the wind rotor or to maintain the drive train of the wind turbine at standstill. The mechanical brake has to be tested, because they may fail.

Typically, every 1400 hours, the secondary brake or mechanical brake is tested in such a way, that the brake is applied at the wind turbine drive train, while the wind turbine generator is rotating in operating speed and is connected to a grid.

All inertia energy of the rotor and the drive train system is decelerated by applying the secondary brake and transferred into heat by friction of the braking system.

However, different factors may introduce errors in such a testing method. For example, the environmental factors are not steady, and same trip limits are used for different wind turbine generator configurations like rotor diameters or gearbox radius. Thus, the deceleration of the wind turbine generator is variable that is used to estimate the performance of the secondary brake or mechanical brake.

In one aspect according to the present invention, a method for testing a mechanical brake of a wind rotor shaft of a wind turbine is provided. The method includes: applying a predetermined desired brake torque to the mechanical brake; applying a predetermined drive torque to the wind rotor shaft by a motor; measuring a parameter indicative the rotational speed of the wind rotor shaft; and, determining the performance of the mechanical brake based on the measured value of the parameter.

In another aspect, a method for testing a mechanical brake of a drive train of a wind turbine is provided. The method includes: applying a predetermined rotational speed to a wind rotor shaft of the drive train by a motor; applying a predetermined desired brake torque to the mechanical brake; maintaining the rotational speed of the drive train at the predetermined rotational speed; and, determining the actual brake torque.

In yet another aspect, a system for testing a mechanical brake of a drive train of a wind turbine is provided, wherein the drive train is connected to a motor. The system includes: a first control device adapted to set a motor parameter, such that the motor rotates and maintains a wind rotor shaft of the drive train with a predetermined rotational speed; a second control device adapted to set a predetermined desired brake torque to the mechanical brake; and, a torque determination device for determining the actual brake torque.

Various aspects, advantages and features of the present invention are apparent from the dependent claims, the description and the accompanying drawings, in which:
Figure 1 is a perspective view of an exemplary wind turbine.
Figure 2 is an enlarged sectional view of a portion of the wind turbine shown in Figure 1.
Figure 3 is schematic drawing of an embodiment of a drive train of a wind turbine;
Figure 4 is a flow chart of a method according to an embodiment;
Figure 5 is a schematic drawing of the drive torque applied to the wind rotor shaft; and
Figure 6 is a flow chart of a method according to another embodiment.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

The embodiments described herein include a wind turbine system and a method, wherein the general brake test will be more accurate and may be carried out at downtimes to avoid downtime for the wind turbine generating due to operating test processes. Thus, the annual energy production may increase. More specifically, the method may use a four quadrant drive system of a generator of a wind turbine, in particular to apply a defined test torque to the brake for a brake capacity test. Thus, the generator is not only used as a generator to produce from the torque electronic energy, but may be also used as a motor to drive the drive train of the wind turbine. Thus, the test method according to embodiments disclosed herein tests the mechanical or secondary brake of a wind turbine and may measure the actual braking force.

As used herein, the term mechanical brake is intended to be representative of a brake transforming kinetic energy into heat by friction. Examples of mechanical brakes are disc brakes or drum brakes. As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power.

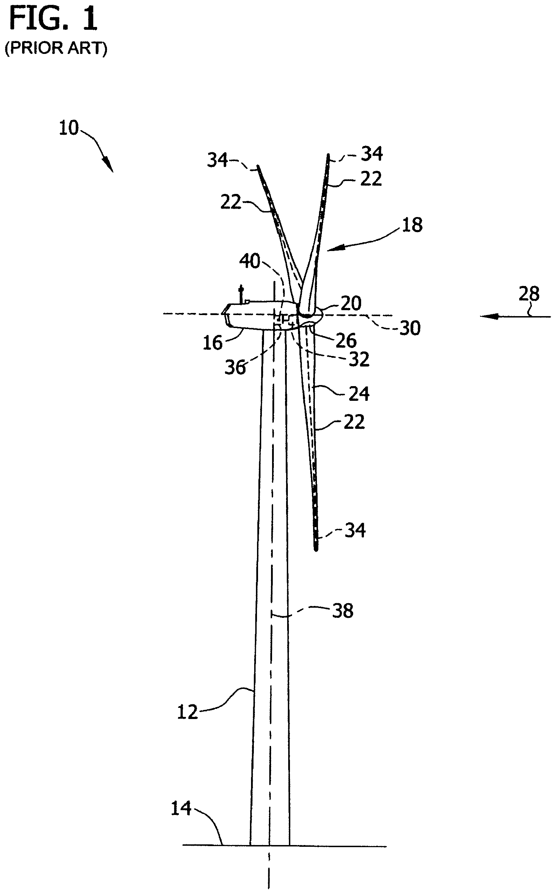

Figure 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Figure 1) between support system 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Figure 1). Loads induced to rotor blades 22 are transferred to hub 20 via load transfer regions 26.

In one embodiment, rotor blades 22 have a length ranging from about 15 meters (m) to about 91 m. Alternatively, rotor blades 22 may have any suitable length that enables wind turbine 10 to function as described herein. For example, other non-limiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18.

In the exemplary embodiment, control system 36 is shown as being centralized within nacelle 16, however, control system 36 may be a distributed system throughout wind turbine 10, on support system 14, within a wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels.

In the embodiments described herein, memory may include, without limitation, a computer-readable medium, such as a random access memory (RAM), and a computer-readable non-volatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, input channels include, without limitation, sensors and/or computer peripherals associated with an operator interface, such as a mouse and a keyboard. Further, in the exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a programmable logic controller (PLC) cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control system control commands. The execution of sequences of instructions is not limited to any specific combination of hardware circuitry and software instructions.

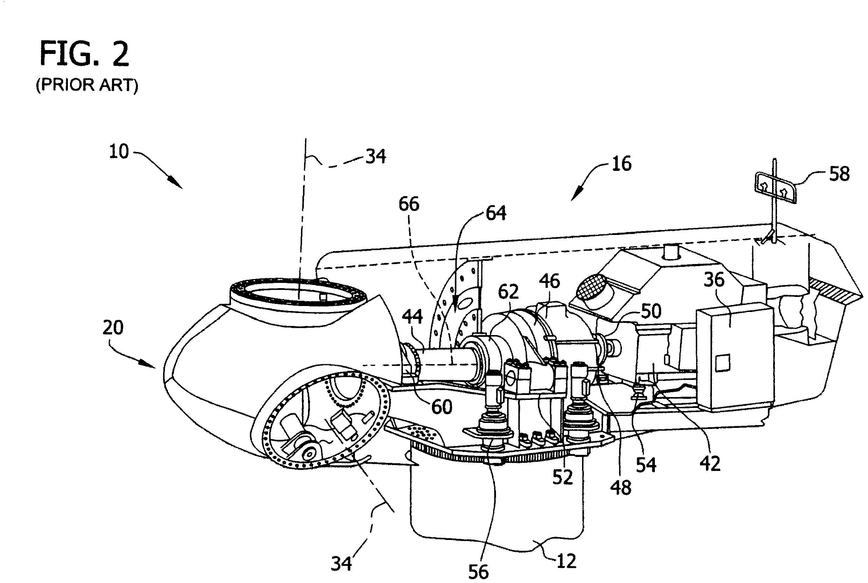

Figure 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to longitudinal axis 66. Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Figure 1) to control the perspective of rotor blades 22 with respect to direction 28 of the wind. Nacelle 16 also includes at least one meteorological mast 58 that includes a wind vane and anemometer (neither shown in Figure 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64.

In the exemplary embodiment, controller of embodiments disclosed herein are real-time controllers that includes any suitable processor-based or microprocessor-based system, such as a computer system, that includes microcontrollers, reduced instruction set circuits (RISC), application-specific integrated circuits (ASICs), logic circuits, and/or any other circuit or processor that is capable of executing the functions described herein. In one embodiment, controller may be a microprocessor that includes read-only memory (ROM) and/or random access memory (RAM), such as, for example, a 32 bit microcomputer with 2 Mbit ROM, and 64 Kbit RAM. As used herein, the term "real-time" refers to outcomes occurring a substantially short period of time after a change in the inputs affect the outcome, with the time period being a design parameter that may be selected based on the importance of the outcome and/or the capability of the system processing the inputs to generate the outcome.

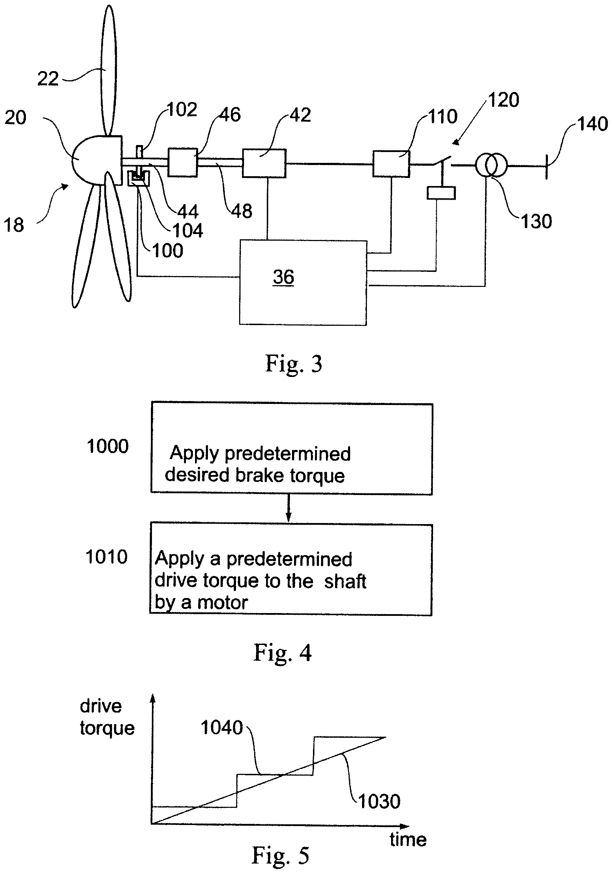

Fig. 3 schematically shows a drive train according to an embodiment of the present disclosure. The drive train of the wind turbine includes the rotor shaft 44, the gearbox 46 and the high speed shaft 48 rotating with a higher speed than the low speed shaft 44, and the electric generator 42, which is coupled to the high speed shaft 48. Some embodiments may also include a drive train, which has a rotor shaft 44 which is directly coupled to the electric generator 42.

The rotor shaft 44 is coupled to the rotor 18, in particular the rotatable hub 20 of the rotor 18. Further, a mechanical brake 100 in form of a disc brake is shown in Fig. 3. A disc 102 is coupled or fixed to the rotor shaft 44 and rotates with the rotor shaft. In other embodiments, the mechanical brake 100 may be coupled to the high speed shaft 48. Embodiments may also include more than one mechanical brake 100, for example two, three, four or more mechanical brakes.

The mechanical brake 100 further includes at least one brake pad 104 which may be pressed onto the disc 102 to cause a friction between the brake pad 104 and the disc 102, such that the rotational speed of the rotor shaft 44 is reduced or to inhibit a rotational movement of the rotor shaft 44. For example, the brake pad may be hydraulically, pneumatically, electrically or mechanically pressed against the disc 102. Typically, the pressure of the brake pad 104 on the disc 102 depends on the hydraulic pressure in case of a hydraulically or pneumatically moved brake pad.

The generator 42 is electrically connected to an inverter 110 which in turn is connected via a circuit breaker 120 and a transformer 130 to the grid 140.

Typically, the drive system of the wind turbine generator is designed to capture the wind energy into converted into electrical energy. The same components may be used to work as a drive system, for example by software control, such that electrical energy form the grid 140 is used to drive the drive train 44, 46, 48 of the wind turbine generator by the generator 42, which is used as a motor. In this case electrical energy will be extracted from the grid and may be converted into mechanical energy. Typically, the torque and the speed of the drive train may be exactly controlled by the wind turbine controller 36.

The drive system or 4 quadrant drive system includes the generator 42, the inverter 110 and the drive train including the rotor shaft 44, the gearbox 46 and the high speed shaft 48. A 4 quadrant drive system is a description of a system that can force/turn clockwise (first quadrant), force/turn counter clockwise (third quadrant), brake in clockwise direction (second quadrant) and brake in counter clockwise direction (fourth quadrant). Typically, such a system is integrated into wind turbines.

Fig. 4 shows a flowchart of an embodiment of a method for testing the secondary brake system of the wind turbine. Typically, the method is started, when the wind turbine is stopped, i.e. the wind rotor is substantially not rotating, for example due to a calm. For example, before the method is started the wind speed may be measured and determined whether the wind speed is below a predetermined limit. In box 1000 a predetermined pressure is applied to the secondary or mechanical brake 100, such that a predetermined desired brake torque is applied to the drive train or wind rotor shaft. For example the full brake force may be applied to the mechanical or secondary brake. In case of a hydraulically brake, the full or maximal pressure is applied to the brake pads which apply thus the full braking force to the disc 102 in case of a disc brake. Then, at a predetermined drive torque is applied to the wind rotor shaft by the electrical generator 42, which functions as a motor. For example, the controller 36 may command to the converter 110, to slowly increase or saturate the drive torque of the shaft via the electric generator 42. For example, as shown in Fig. 5, the drive torque may be increased continuously (see line 1030) to the predetermined maximal drive torque or, in another embodiment, the drive torque may be increased in discrete steps up to the predetermined maximal drive torque. For example, at the predetermined maximal drive torque, the braking capability of the mechanical brake is evaluated. If the brake holds the predetermined maximal torque, the test is passed. In case the brake slips, which may be determined via an incremental sensor, the test is failed. In some embodiments, the test may be stopped when the brake slips, even before the predetermined maximal drive torque is reached.

The predetermined maximal drive torque applied by the generator may depend on the pressure applied to the brake 100. For example, if the full pressure is applied, that means that the full braking torque is applied to the wind rotor shaft, another predetermined maximal torque is applied to the shaft by the generator than in case of a lower pressure. For example, at the full pressure of the mechanical brake is denominated hard brake, wherein a lower pressure applied to the mechanical brake may be denominated soft brake. Thus, a hard brake torque is applied to the rotor shaft if a hard brake value is applied to the brake or a soft brake torque is applied to the rotor shaft if a soft brake value is applied mechanical brake.

The predetermined maximal drive torque applied by the generator to the wind rotor shaft may be based on design parameters of the brake to test. For example, the predetermined maximal torque may depend on the type of the mechanical brake, for example with a disc brake or a drum brake, on the size of the brake pads, on the number of brakes etc.

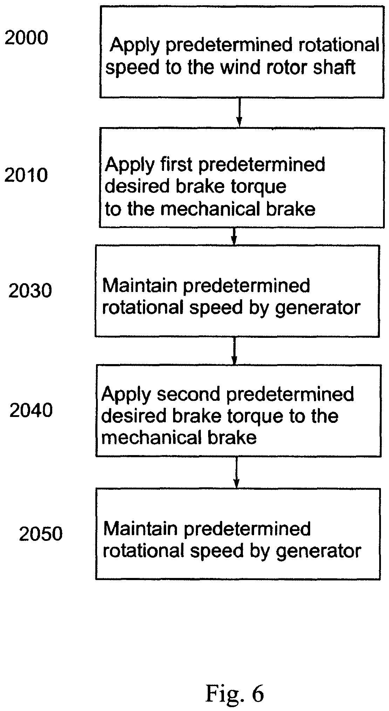

Fig. 6 shows a further method for testing the mechanical brake. First, during a calm, i.e. the wind rotor is substantially not rotating due to the wind acting on the blades of the wind rotor, a predetermined rotational speed is applied to the wind rotor shaft by the electric generator 42 of the wind turbine generator (box 2000). For example, it may be determined whether the wind speed is below a predetermined wind speed. Then, the secondary or mechanical brake is set to a first predetermined desired brake torque. Thus, a predetermined brake parameter, for example a predetermined pressure for a soft brake in case of a hydraulic brake or a pneumatic brake, is applied to the mechanical brake that may apply in the normal operational state the predetermined desired brake torque to the wind rotor shaft. For example, the first predetermined desired brake torque may correspond to the soft brake torque. However, if the brake does not work properly it has typically a lower actual brake torque compared to the desired brake torque. The predetermined rotational speed is maintained by the electric generator and a generator current is measured that is applied to keep the drive train at the predetermined test speed. With that value, the actual brake torque of the mechanical brake can be determined, because the power needed by the generator to maintain the rotational speed corresponds to the braking force of the mechanical brake. An induction or a synchronous motor has one or more specific parameters, which may be considered when determining the drive torque from the current and/or the voltage driving the motor. Further, the brake torque may depend on the actual pitch of the wind rotor blades. Typically the predetermined rotational speed at which the motor or generator rotates is below 100 rpm in case of a wind turbine including a gear box. In normal operation the motor or generator may rotate with speeds of about 2000 rpm. Thus, the wind rotor shaft will rotate with a rotational speed of below 10 rpm, for example less than 5 rpm. As the rotational speed of the wind rotor is slow, the blade pitch may have only a minor effect on the results and may be ignored in an embodiment.

In a further step, a second predetermined brake parameter is applied to the mechanical brake in order to apply a second predetermined desired brake torque to a wind rotor shaft by the mechanical brake. For example, after the brake has been used a lot and the brake pads have been used up, the nominal brake torque is higher than the actual break torque. For example, the second predetermined desired brake torque may correspond to the hard brake torque. The rotational speed is maintained by the generator and the generator current is measured is applied to keep the drive train at the predetermined rotational test speed.

With the method according to embodiments disclosed herein, the mechanical or secondary brake test is more accurate and can be carried out at downtimes to avoid downtime for the wind turbine generator due to operating test processes. By measuring the exact brake torque an aging history may be produced and preventive maintenance may be carried out before the brake fails. In particular, the methods and systems disclosed herein may use a four quadrant drive system of a wind turbine generator to apply the find test torques to the brake for a brake capacity test. Typically, wind turbine generators include such a four quadrant drive system, in the inverter. For example, the four quadrant drive system may contain the wind turbine generator main converter, the wind turbine generator, the wind turbine generator main shaft and/or the gearbox. Thus, the drive system is used to apply defined torque against a closed brake to test a capacity of the brake.

Exemplary embodiments of systems and methods for testing a mechanical brake of a wind rotor shaft of a wind turbine, wherein the wind rotor shaft is connected to a motor are described above in detail. The systems and methods are not limited to the specific embodiments described herein, but rather, components of the systems and/or steps of the methods may be utilized independently and separately from other components and/or steps described herein.

In an embodiment, which may be combined with other embodiments, the predetermined drive torque is lower than or equal to a predetermined maximal drive torque depending on the predetermined desired brake torque. Thus, the motor torque may be adapted to the desired brake torque to test the mechanical brakes.

For example, in an embodiment, the predetermined drive torque is varied with the time by the motor, wherein, in particular, the predetermined drive torque is increased from a start torque to a predetermined maximal torque. A start torque may be zero.

Typically, it is monitored whether the wind rotor shaft rotates, in particular at the predetermined maximal torque, to determine whether the mechanical brake works properly.

In an embodiment, the predetermined drive torque is continuously increased and/or is increased by discrete steps.

For example, in an embodiment, which may be combined with other embodiments disclosed herein, the method may further include measuring a parameter indicative for the motor current, determining the actual brake torque based on the parameter indicative for the motor current.

In an embodiment, which may be combined with other embodiment disclosed herein, the predetermined rotational speed of the wind rotor shaft is below 10, in particular below 5.

In an embodiment, which may be combined with other embodiment disclosed herein, applying a predetermined desired brake torque includes at least one of the following: applying a predetermined pressure, applying a predetermined brake force of a brake pad, and applying a predetermined current.

In an embodiment, the wind turbine includes a generator for transforming rotational energy of the wind rotor shaft into electrical energy to be fed into a grid, wherein the method further includes: operating generator as a motor for driving the shaft.

For example, in an embodiment, which may be combined with other embodiments, the method may further include determining whether the wind is below a predetermined wind speed. Thus, the method may be started, in an embodiment, only during a calm.

In an embodiment, which may be combined with other embodiments disclosed herein, the method may further include applying at least two different predetermined desired brake torques to the mechanical brake; and determining the respective actual brake torque.

For example, in an embodiment, the motor is electrically connected to an inverter and the motor parameter based on a parameter measured at the inverter.

In an embodiment, the wind turbine includes a generator for transforming rotational energy of the wind rotor shaft into electrical energy to be fed into a grid, wherein first control device is adapted to operate the generator as a motor for driving the wind rotor shaft.

For example, in an embodiment, the first control device and the second control device are integrated into a single control device.

In an embodiment, which may be combined with other embodiments, the mechanical brake is a friction brake. Thus, the mechanical brake converts the rotational energy into heat. For example, the friction brake may be a disc brake or a drum brake.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for testing a mechanical brake of a wind rotor shaft of a wind turbine, comprising:
   applying a predetermined desired brake torque to the mechanical brake;
   applying a predetermined drive torque to the wind rotor shaft by a motor;
   measuring a parameter indicative the rotational speed of the wind rotor shaft; and,
   determining the performance of the mechanical brake based on the measured value of the parameter.
2. The method according to clause 1, wherein the predetermined drive torque is no greater than a predetermined maximum drive torque depending on the predetermined desired brake torque.
3. The method according to any preceding clause, wherein the predetermined drive torque is varied with time by the motor.
4. The method according to any preceding clause, wherein the predetermined drive torque is varied between a start torque and a predetermined maximum torque.
5. The method according to any preceding clause, wherein the predetermined drive torque is continuously increased from a start torque to predetermined maximum torque.
6. The method according to any preceding clause, wherein the predetermined drive torque is increased by discrete steps.
7. The method according to any preceding clause, wherein applying a predetermined desired brake torque includes at least one of the following:
   applying a predetermined pressure, applying a predetermined brake force of a brake pad, and applying a predetermined current.
8. The method according to any preceding clause, wherein the wind turbine includes a generator for transforming rotational energy of the wind rotor shaft into electrical energy to be fed into a grid, wherein the method further comprises:
   operating the generator as a motor for driving the shaft.
9. The method according to any preceding clause, further comprising determining whether the wind is below a predetermined wind speed.
10. A method for testing a mechanical brake of a drive train of a wind turbine comprising:
   applying a predetermined rotational speed to a wind rotor shaft of the drive train by a motor;
   applying a predetermined desired brake torque to the mechanical brake;
      maintaining the rotational speed of the drive train at the predetermined rotational speed; and
   determining the actual brake torque.
11. The method according to any preceding clause, further comprising measuring a parameter indicative for the motor current, and
   determining the actual brake torque based on the parameter.
12. The method according to any preceding clause, wherein the predetermined rotational speed of the wind rotor shaft is below 10 rpm.
13. The method according to any preceding clause, wherein applying a predetermined desired brake torque includes at least one of the following:
   applying a predetermined pressure, applying a predetermined brake force of a brake pad, and applying a predetermined current.
14. The method according to any preceding clause, wherein the wind turbine includes a generator for transforming rotational energy of the wind rotor shaft into electrical energy to be fed into a grid, wherein the method further comprises:
   operating the generator as a motor for driving the shaft.
15. The method according to any preceding clause, further comprising determining whether the wind is below a predetermined wind speed.
16. The method according to any preceding clause, further comprising applying at least two different predetermined desired brake torques to the mechanical brake;
   determining the respective actual brake torque, and
   comparing the actual brake torque to the desired brake torques.
17. A system for testing a mechanical brake of a drive train of a wind turbine, wherein the drive train is connected to a motor, comprising:
   a first control device adapted to set a motor parameter, such that the motor rotates and maintains a wind rotor shaft of the drive train with a predetermined rotational speed;
   a second control device adapted to set a predetermined desired brake torque to the mechanical brake; and
   a torque determination device for determining the actual brake torque.
18. The system according to any preceding clause, wherein the motor is electrically connected to an inverter and the motor parameter is based on a parameter measured at the inverter.
19. The system according to any preceding clause, wherein the wind turbine includes a generator for transforming rotational energy of the wind rotor shaft into electrical energy to be fed into a grid, wherein the first control device is adapted to operate the generator as a motor for driving the wind rotor shaft.
20. The system according to any preceding clause, wherein the first control device and the second control device are integrated into a single control device.

## Claims

1. A method for testing a mechanical brake (100) of a wind rotor shaft (44, 48) of a wind turbine (10), comprising:
applying a predetermined desired brake torque to the mechanical brake (100);
applying a predetermined drive torque to the wind rotor shaft by a motor (42);
and
measuring a parameter indicative the rotational speed of the wind rotor shaft;
and
determining the performance of the mechanical brake based on the measured value of the parameter.

2. The method according to claim 1, wherein the predetermined drive torque is no greater than a predetermined maximum drive torque depending on the predetermined desired brake torque.

3. The method according to claim 1 or claim 2, wherein the predetermined drive torque is varied with time by the motor (42), wherein, in particular, the predetermined drive torque is varied between a start torque and a predetermined maximum torque.

4. The method according to any preceding claim, wherein the predetermined drive torque is continuously increased and/or is increased by discrete steps.

5. The method for testing a mechanical brake (100) of a drive train (44, 48) of a wind turbine (10) comprising:
applying a predetermined rotational speed to a wind rotor shaft of the drive train by a motor (42);
applying a predetermined desired brake torque to the mechanical brake (100);
maintaining the rotational speed of the drive train at the predetermined rotational speed; and
determining the actual brake torque.

6. The method according to claim 5, further comprising measuring a parameter indicative for the motor current, determining the actual brake torque based on the parameter indicative for the motor (42) current.

7. The method according to claim 5 or 6, wherein the predetermined rotational speed of the wind rotor shaft is below 10 rpm.

8. The method according to one of the preceding claims, wherein applying a predetermined desired brake torque includes at least one of the following:
applying a predetermined pressure, applying a predetermined brake force of a brake pad, and applying a predetermined current.

9. The method according to one of the preceding claims, wherein the wind turbine includes a generator for transforming rotational energy of the wind rotor shaft into electrical energy to be fed into a grid, wherein the method further comprises:
operating the generator as a motor for driving the shaft.

10. The method according to one of the preceding claims, further comprising determining whether the wind is below a predetermined wind speed.
